# EUROPEAN PATENT SPECIFICATION

(11) **EP 2 227 405 B1**
(45) Date of publication and mention of the grant of the patent: **15.02.2012**
(21) Application number: 07847971.4
(22) Date of filing: 07.12.2007
(51) Int. Cl.: B60R 1/08

(54) **A REAR VIEW MIRROR AND A VEHICLE**
RÜCKSPIEGEL UND FAHRZEUG
RÉTROVISEUR ET VÉHICULE

(43) Date of publication of application: 15.09.2010
(73) Proprietor: Fahner, Tiemen, 8072 BR Nunspeet (NL)
(72) Inventor: Fahner, Tiemen, 8072 BR Nunspeet (NL)
(74) Representative: De Vries & Metman
(86) International application number: PCT/EP2007/063513
(87) International publication number: WO 2009/071130

(56) References cited:
- NL-A- 7 711 500
- US-A- 4 859 046
- US-A- 5 479 297
- US-A- 5 479 297

## Description

The present invention relates to a vehicle comprising a rear view mirror.

Such a rear view mirror is known from NL 7711500. The prior art rear view mirror is intended for use in passenger cars and is provided with a distal portion for a blind spot view. A blind spot is typically present next to the vehicle in case of using a mirror having a flat mirror surface which is oriented such that it gives a view on the rear traffic only. This means, for example, that a driver has to look over his shoulder carefully before changing a lane. The prior art rear view mirror as mentioned above includes a distal portion which provides a better view on the blind spot, which helps the driver to drive More safely, especially when wishing to overtake.

US 5, 479, 297, which corresponds to the preamble of claim 1, relates to a mirror assembly which may be mounted to a vehicle to facilitate the safe forward and rearward maneuverability of the vehicle. The mirror assembly includes a frame having an open end and having at least one movable surface. A fixed mirror and a movable mirror are mounted within the frame such that an edge of the movable mirror impinges upon the movable surface of the frame. The movable mirror can be automatically controlled via a prime mover to move relative to the fixed mirror, the frame, and the movable surface. The movable surface is biased against an edge of the movable mirror, and is displaced by the movement of the movable mirror so as to afford a clear line of sight through the movable mirror.

The present invention aims to provide a rear view mirror which further improves safely driving.

For this purpose the vehicle comprises a rear view mirror according to claim 1.

Due to these features a bigger part of the mirror surface of the rear view mirror is used for providing a view on the blind spot. As a consequence, a smaller part of the mirror surface is used for providing a view on the area behind the vehicle. In practice, however, a relatively smaller proximal portion does not adversely affect the safety, because another vehicle being at a relatively large distance behind the vehicle has small dimensions as seen in the rear view mirror. A small image of the vehicle as seen in a relatively large proximal portion of the rear view mirror, which is the case in prior art rear view mirrors, means inefficient use of the mirror surface of the proximal portion since a large part of the proximal portion shows a view on the areas next to the sides of the vehicles of the rear traffic. Therefore, the proximal portion may be relatively small.

A relatively wide distal portion provides a broad view on the blind spot, without the necessity of a convex mirror surface of the distal portion which might distort the view and cause a passing vehicle passing at high speed through the view of the distal portion. The advantage of the rear view mirror according to the invention is that it provides a high level of safety. It is even possible to direct the distal portion in such a way that it is no longer necessary for the driver to look in sideward direction (over his shoulder) in order to see wether another vehicle is in the area, which is normally called the blind spot. Therefore, the driver can concentrate on the traffic before him better.

In a preferred embodiment the mirror surface of at least one of the proximal portion and the distal portion is substantially flat, since this provides a non-distorted image to the driver. However, entirely or partially non-flat mirror surfaces are not excluded. It is, for example, possible to apply a narrow convex mirror surface at the location where the edge portions of the proximal and distal portions converge so as to create a gradual transitional mirror surface between said portions. This enables the driver to follow a passing vehicle gradually. In principle, a passing vehicle can be followed by the eyes without turning the head or with negligible turning the head. In an alternative embodiment the mirror surface of both proximal and distal portions are substantially flat.

The proximal portion and the distal portion may be tiltable with respect to each other. This improves the driving safety since the distance between the driver's eyes and the rear view mirror may vary per vehicle type, and that distance is also dependent on the length of the upper body of a driver. Preferably, the rear view mirror provides the driver the possibility to change the orientation of the distal and proximal portions from the inner side of the vehicle.

The invention relates to a vehicle comprising a vehicle body and a rear view mirror comprising a mirror surface including at least a proximal portion and a distal portion for a blind spot view, wherein the normal to the mirror surface of the distal portion is different from that of the proximal portion, and wherein the rear view mirror is mounted to the vehicle body such that the distal portion is disposed beyond the proximal portion as seen from the vehicle body to the rear view mirror, wherein the length of the distal portion is larger than that of the proximal portion as seen along at least one line extending on the mirror surface in a direction from the vehicle body to the rear view mirror.

The invention will hereafter be elucidated with reference to a very schematic drawing illustrating an embodiment of the invention by way of example.
Fig. 1 is a very schematic plan view of a vehicle which is provided with an embodiment of a rear view mirror according to the invention.
Fig. 2 is a part of the view of Fig. 1 on enlarged scale.
Fig. 3 is a schematic perspective view of the embodiment of the rear view mirror of Fig. 1 and 2.

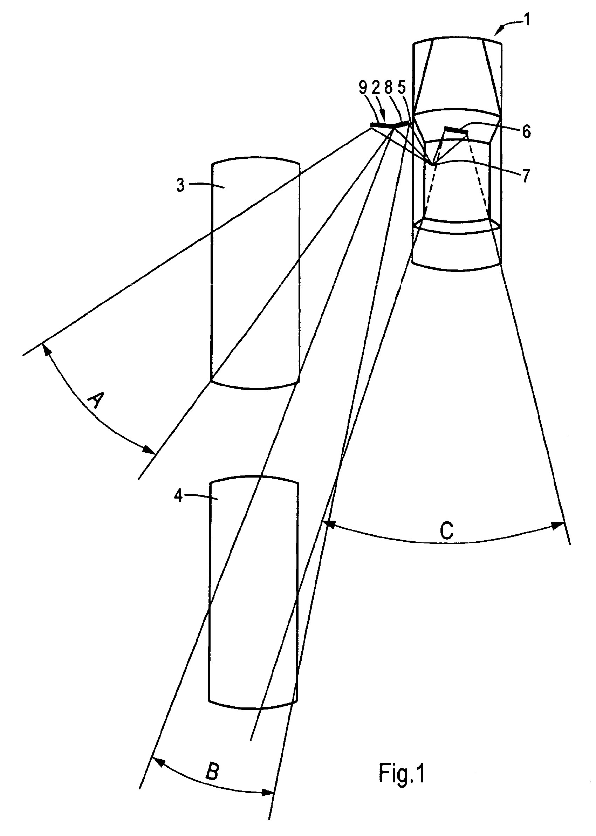

Fig. 1 shows a vehicle 1 including an embodiment of a rear view mirror 2 according to the invention, a first passing vehicle 3 and a second passing vehicle 4. The rear view mirror 2 is mounted to a vehicle body 5 of the vehicle 1. The vehicle 1 drives on a right driving lane, and the first passing vehicle 3 and the second passing vehicle 4 drive on a left driving lane extending parallel to the right driving lane. Fig. 1 illustrates a situation in which the first passing vehicle 3 and the second passing vehicle 4 are passing the vehicle 1.

The vehicle 1 is also provided with an internal rear view mirror 6, and the eyes of a driver are illustrated by a viewpoint 7 as shown in Fig. 1.

The embodiment of the rear view mirror 2 includes a mirror surface which is provided with a proximal portion 8 and a distal portion 9. It is mounted to the vehicle body 5 in such a way that the distal portion 9 is disposed beyond the proximal portion 8 as seen from the vehicle body 5 to the rear view mirror 2. The distal portion 9 is suitable for a view on a blind spot. This means that the normal to the mirror surface of the proximal portion 8 is different from that of the distal portion 9. More specifically, the angle between a line extending in longitudinal direction of the vehicle 1 and the normal to the mirror surface of the distal portion 9 is smaller than that between the line and the normal to the mirror surface of the proximal portion 8 as seen from above to the vehicle 1, in the case when both the proximal portion 8 and the distal portion 9 form an acute angle with respect to the longitudinal line.

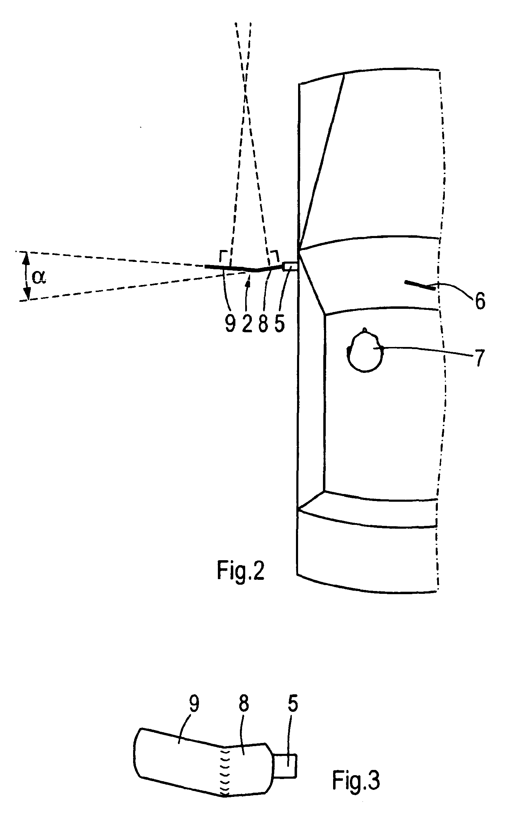

Fig. 2 illustrates that lines along the normal to the proximal portion 8 and along the normal to the distal portion 8 have different directions. The indicated angle α may be about 10°, for example, but α may be smaller or larger, depending on the dimensions of the vehicle, driver, and the like.

As seen in a direction from the vehicle body 5 to the rear view mirror 2, i.e. following a virtual horizontal line extending on the mirror surface of the proximal and the distal portions 8, 9, the length of the distal portion 9 is larger than that of the proximal portion 8. In other words the distal portion 9 provides a wider mirror surface than the proximal portion 8. In the embodiment shown in Fig. 3 the ratio of the widths of the proximal portion 8 and the distal portion 9 is about 1:2, but other ratios higher than 1 are conceivable.

In the embodiment shown in Fig. 1 the mirror surface of the proximal portion 8 and the distal portion 9 are substantially flat. This means that the driver can see the first and second passing vehicles 3, 4 in non-distorted shape. Fig. 1 also shows that the vehicles 3, 4 can be followed by means of the internal rear view mirror 6 via the proximal portion 8 of the externally mounted rear view mirror 2 and finally by means of the distal portion 9 thereof.

Furthermore, Fig. 1 illustrates that the first passing vehicle 3 drives within a distal portion view area or a blind spot area A, and the second passing vehicle 4 drives partly within a proximal portion view area B and also partly within a view area C of the internal rear view mirror 6. It is noted that in case of an entirely flat mirror surface of both the proximal and distal portion there is a blind spot area left between the distal portion view area A and the proximal portion view area B. In practice, however, the orientation of the proximal portion 8 and the distal portion 9 are such that this blind spot area is small with respect to the dimensions of passing vehicles 3, 4. Moreover, converging edge portions of the proximal portion 8 and the distal portion 9 in the region where both portions 8, 9 are adjacent to each other may be shaped in such a way that there is a gradual transition of the mirror surface of the proximal 8 and distal portion 9 so as to minimize the blind spot area, for example by applying a local transitional convex shape.

Preferably, the proximal portion 8 and the distal portion 9 are tiltable with respect to each other. This can be achieved, for example, by applying electric motors associated with the proximal and distal portions, which electric motors can be operated by the driver from the inner side of the vehicle 1.

From the foregoing, it will be clear that the invention provides a vehicle with a rear view mirror which significantly improves safely driving.

The invention is not limited to the example shown in the drawings and described hereinbefore, which may be varied in different manners within the scope of the claims and their technical equivalents.

## Claims

1. A vehicle (1) including a rear view mirror (2) comprising a mirror surface including at least a proximal portion (8) and a distal portion (9) for a blind spot view, wherein the normal to the mirror surface of the proximal portion (8) is different from that of the distal portion (9), wherein the length of the distal portion (9) is larger than that of the proximal portion (8) as seen along at least one line extending on the mirror surface in a direction from the proximal (8) to the distal portion (9) **characterized in that** the rear view mirror (2) is mounted externally of the vehicle (1), and **in that** the vehicle (1) is provided with an internal rear view mirror (6) inside the vehicle (1), which rear view mirrors (2, 6) are arranged such that a passing vehicle from behind can be followed by a driver of the vehicle (1) by means of the internal rear view mirror (6), via the proximal portion (8) of the externally mounted rear view mirror (2) and finally by means of the distal portion (9) thereof.

2. A vehicle (1) according to claim 1, wherein the mirror surface of at least one of the proximal portion (8) and the distal portion (9) is substantially flat.

3. A vehicle (1) according to claim 1 or 2, wherein the proximal portion (8) and the distal portion (9) are tiltable with respect to each other.

## Patentansprüche

1. Fahrzeug (1) mit einem Rückspiegel (2), der eine Spiegelfläche aufweist, die mindestens einen proximalen Abschnitt (8) und einen distalen Abschnitt (9) für eine Sicht in einen toten Winkel aufweist, wobei sich die Normale zur Spiegelfläche des proximalen Abschnitts (8) von der des distalen Abschnitts (9) unterscheidet, wobei die Länge des distalen Abschnitts (9) größer als die des proximalen Abschnitts (8) ist, wenn sie längs mindestens einer Linie betrachtet wird, die sich auf der Spiegelfläche in eine Richtung vom proximalen (8) zum distalen Abschnitt (9) erstreckt, **dadurch gekennzeichnet, dass** der Rückspiegel (2) außerhalb des Fahrzeugs (1) angebracht ist und dass das Fahrzeug (1) mit einem Innenspiegel (6) innerhalb des Fahrzeugs (1) versehen ist, wobei die Rückspiegel (2, 6) so angeordnet sind, dass ein von hinten überholendes Fahrzeug durch einen Fahrer des Fahrzeugs (1) mittels des Innenspiegels (6) über den proximalen Abschnitt (8) des außen angebrachten Rückspiegels (2) und schließlich mittels dessen distalen Abschnitts (9) verfolgt werden kann.

2. Fahrzeug (1) nach Anspruch 1, wobei die Spiegelfläche des proximalen Abschnitts (8) und/oder des distalen Abschnitt (9) im Wesentlichen eben ist.

3. Fahrzeug (1) nach Anspruch 1 oder 2, wobei der proximale Abschnitt (8) und der distale Abschnitt (9) in Bezug zueinander kippbar sind.

## Revendications

1. Véhicule (1) équipé d'un rétroviseur (2) muni d'une surface réfléchissante comportant au moins une région proximale (8) et une région distale (9) adaptée à une vision sur tache aveugle, la ligne de la région proximale (8), normale à la surface réfléchissante, étant différente de celle de la région distale (9), la longueur de ladite région distale (9) étant supérieure à celle de ladite région proximale (8) en observant le long d'au moins une ligne s'étendant, sur ladite surface réfléchissante, dans une direction partant de ladite région proximale (8) et gagnant ladite région distale (9), **caractérisé par le fait que** le rétroviseur (2) est monté à l'extérieur du véhicule (1) ; et **par le fait que** ledit véhicule (1) est doté d'un rétroviseur intérieur (6) dans l'habitacle dudit véhicule (1), lesdits rétroviseurs (2, 6) étant agencés de façon telle qu'un véhicule, dépassant par l'arrière, puisse être suivi par un conducteur du véhicule (1) au moyen du rétroviseur intérieur (6) par l'intermédiaire de la région proximale (8) du rétroviseur (2) monté à l'extérieur et, au stade final, au moyen de la région distale (9) de ce dernier.

2. Véhicule (1) selon la revendication 1, dans lequel la surface réfléchissante d'au moins l'une des régions proximale (8) et distale (9) est substantiellement aplatie.

3. Véhicule (1) selon la revendication 1 ou 2, dans lequel la région proximale (8) et la région distale (9) peuvent basculer l'une par rapport à l'autre.
